# EUROPEAN PATENT APPLICATION

(11) **EP 1 892 437 A2**
(43) Date of publication of application: **27.02.2008**
(21) Application number: 07016044.5
(22) Date of filing: 16.08.2007
(51) Int. Cl.: F16H 59/02

(54) **Select return mechanism**

(30) Priority: 22.08.2006 JP 2006225367
(71) Applicant: AISIN AI Co., Ltd., Nishio-shi, Aichi-ken (JP)
(72) Inventor: Hattori, Souichirou, Nishio-shi Aichi-ken (JP)
(74) Representative: Serjeants

(57) **Abstract**

A select return mechanism of a shift lever (1) having a spherical portion (1a), includes: a bolt (5) extending along a select direction of the shift lever (1) and engaged with an inside of the spherical portion (1a); a cover (6) extending along the select direction and protruding from the spherical portion (1a); a spring (7) extending along the select direction and compressively mounted inside of the cover (6), one end of the spring (7) being attached to an end surface of the bolt (5) and elastically compressed in response to a select operation of the shift lever (1); a ball (8) partially housed inside the cover (6) and in contact with the other end of the spring (7) so that the ball (8) is biased by the spring (7); and a gradient adjusting member (9) having at least one guiding surface (9a/9b) on which the ball (8) slides.

## Description

### FIELD OF THE INVENTION

The present invention relates to a select return mechanism of a shift lever supporting apparatus. More particularly, the present invention pertains to a select return mechanism of a shift lever supporting apparatus for use in a transmission of a vehicle, especially to a select return mechanism of a floor type shift lever supporting apparatus for use in a transmission of a vehicle.

### BACKGROUND

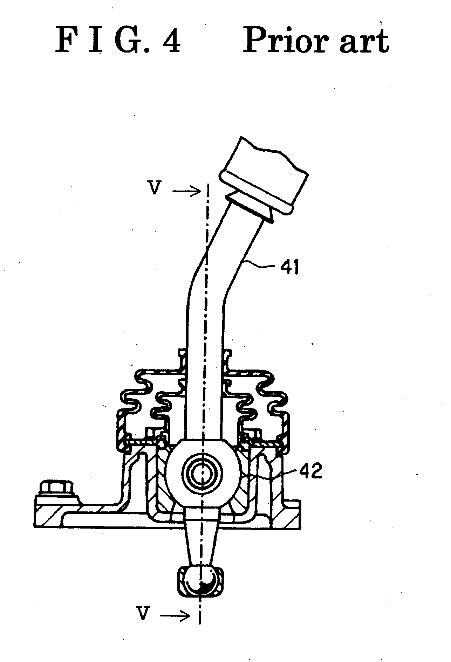

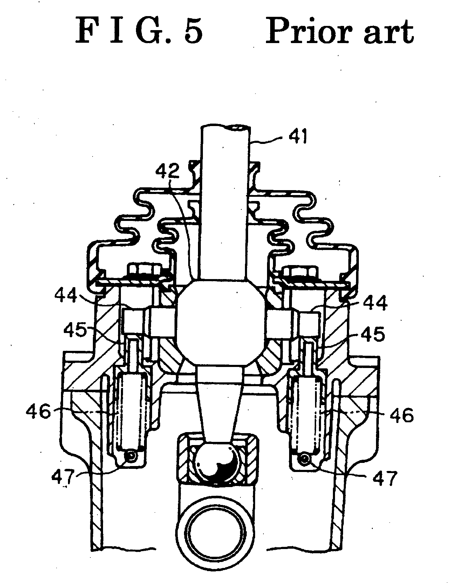

Fig. 4 is a sectional view illustrating a conventional supporting apparatus of a shift lever. Fig. 5 is an enlarged sectional view, taken along line V-V in Fig. 4, in which a right-and-left direction corresponds to a select direction of a shift lever.

As illustrated in Figs. 4 and 5, pins 44, 44 protrude outwardly and in opposite directions from a large spherical ball 42 of a shift lever 41 and extend along the select direction of the shift lever 41. Arranged respectively below the pins 44, 44 are caps 45, 45 extending along an axial direction of the shift lever 41. The caps 45, 45 are positioned at right and left sides of the shift lever 41. Springs 46, 46 are respectively housed in the caps 45, 45. Pins 47, 47 are attached at bottom end surfaces of the springs 46, 46. Each spring 46 is compressively mounted between the corresponding cap 45 and the corresponding pin 47.

A select return mechanism is provided at the left and right sides of the shift lever 41. The left portion of the select return mechanism is structured with the cap 45, the spring 46 and the pin 47, which are all arranged at the left side of the shift lever 41 in Fig. 5. The left portion of the select return mechanism is operated to return the shift lever 41 to a lower shift stage. Likewise, the right portion of the select return mechanism is structured with the cap 45, the spring 46 and.the pin 47, which are all arranged at the right side of the shift lever 41 in Fig. 5. The right portion of the select return mechanism is operated to return the shift lever 41 to a higher shift stage. As described above, the select return mechanism of the supporting apparatus of a shift lever includes six components.

When the shift lever 41 is operated for a select operation either in the left or right direction in Fig. 5, either the left or right portion of the select return mechanism is operated and the corresponding spring 46 is elastically pressed. Because the spring 46 possess a spring force, i.e., a restoring force that causes an object to return to an equilibrium, the spring force of the spring 46 generates a select return force which is applied to the shift lever 41 so that the shift lever 41 is adjusted to return in the other direction or to the neutral position.

JP09-21454A (Fig. 1) discloses therein a shift lever supporting apparatus for use in a manual transmission, in which a large spherical portion of a shift lever is supported by a shift lever retainer so that the large spherical portion of the shift lever rotates for shift and select operations. The large spherical portion of the shift lever includes a hollow shaped supporting portion on its rotational axis, by which the shift operation is achieved. Mounted in the hollow shaped supporting portion are a spring and spherical members (balls). The spherical members are biased by the force of the spring so as to impact with a cam of the shift lever retainer. In such circumstances, when the shift lever is operated for the select operation, the spherical members are respectively pushed to the inside of the supporting portion against the force of the spring and slide on inclined surfaces of the cams.

In the supporting apparatus of a shift lever in Figs. 4 and 5, the select return mechanism is provided at the left and right sides of the shift lever 41 and is structured with six components.

According to the shift lever supporting apparatus disclosed in JP09-21454A, the ball (a movable member) and the cam are each arranged at both the left and right sides of the shift lever, which structure specifies that components are arranged at both left and right sides of the shift lever in an identical manner as the structure illustrated in Figs. 4 and 5. JP09-21454A does not disclose therein a structure in which the ball is arranged only at one side of the shift lever.

A need thus exists for a shift lever return mechanism in a shift lever supporting apparatus, which includes less components and which is manufactured at a reduced cost.

### SUMMARY OF THE INVENTION

According to an aspect of the present invention, a select return mechanism of a shift lever, includes: a spherical portion provided at the shift lever; a bolt extending along a select direction of the shift lever and threadably engaged with an inner surface of the spherical portion of the shift lever; a cover extending along the select direction of the shift lever and protruding outwardly from the inside of the spherical portion; a spring extending along the select direction of the shift lever and compressively mounted inside of the cover, one end of the spring being attached to an end surface of the bolt and elastically compressed in response to a select operation of the shift lever; a ball partially housed inside the cover and in contact with the other end of the spring so that the ball is biased by the spring; and a gradient adjusting member having at least one guiding surface on which the ball slides.

As described above, the select return mechanism includes five components such as the bolt, the cove, the spring, the ball and the spacer (gradient adjusting member). As a result, it is possible to provide the select return mechanism which is structured with less components and which is manufactured at a reduced cost.

In the select return mechanism, the guiding surface on which the ball slides is divided to the lower-shift stage guiding surface and the higher-shift stage guiding surface. Therefore, it is possible, only by use of the single spring, to design and to achieve the select return loads of the lower and higher shift stage sides independently from each other. Further, by changing the gradient shape of each lower and higher shift stage guiding surface, select return load-spring deflection characteristics is achieved, which are different from conventional linear characteristics.

Further, the one end of the spring is in contact with the end surface of the bolt, which facilitates setting an initial length of the spring and further stabilizes an elastic compression of the spring during the select return movement of the shift lever. As a result, it is possible to obtain desired select return characteristics.

Still further, the at least one guiding surface includes the first guiding surface, on which the ball 8 slides when the shift lever is manipulated to a lower-shift stage side along the select direction, and a second guiding surface, on which the ball slides when the shift lever is manipulated to a higher-shift stage side along the select direction. The first gradient of the first guiding surface is designed independently from the second gradient of the second guiding surface. In this case, it is possible to design and achieve the select return loads of the lower and higher shift stage sides independently from each other.

Still further, the gradient of at least the corresponding guiding surface varies, and the at least one of the guiding surfaces and includes a curved surface. As a result, it is possible to obtain non-linear load characteristics (select return characteristics).

### BRIEF DESCRIPTION OF THE DRAWINGS

The foregoing and additional features and characteristics of the present invention will become more apparent from the following detailed description considered with reference to the accompanying drawings, wherein:

Fig. 1 is a sectional view illustrating a select return mechanism of a shift lever apparatus according to an embodiment of the present invention;

Fig. 2 is an enlarged view illustrating a relevant portion in Fig. 1;

Fig. 3 is a view for explaining a variation of the select return mechanism illustrated in Fig. 1, wherein, in Fig. 3A the gradient of a guiding surface is constant, and in Fig. 3B the gradient of the guiding surface is variant, and Fig. 3C is a load-deformation diagram;

Fig. 4 is a sectional view illustrating a conventional shift lever supporting apparatus; and

Fig. 5 is an enlarged view of Fig. 4 taken along line V-V.

### DETAILED DESCRIPTION

An embodiment will be described below with reference to the attached drawings.

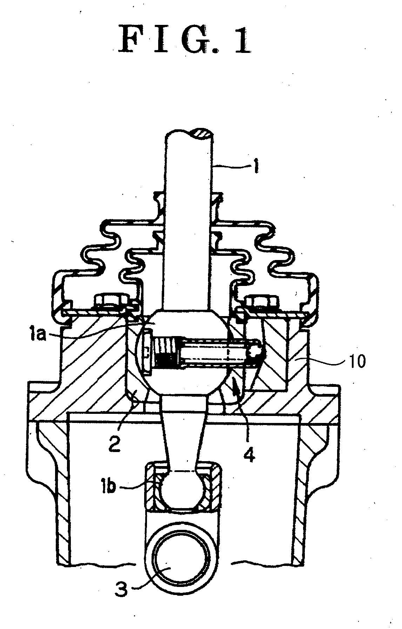

Fig. 1 is a sectional view illustrating a select return mechanism of a shift lever apparatus according to the embodiment of the present invention. The sectional view in Fig. 1 corresponds to a sectional view taken along line V-V in Fig. 4.

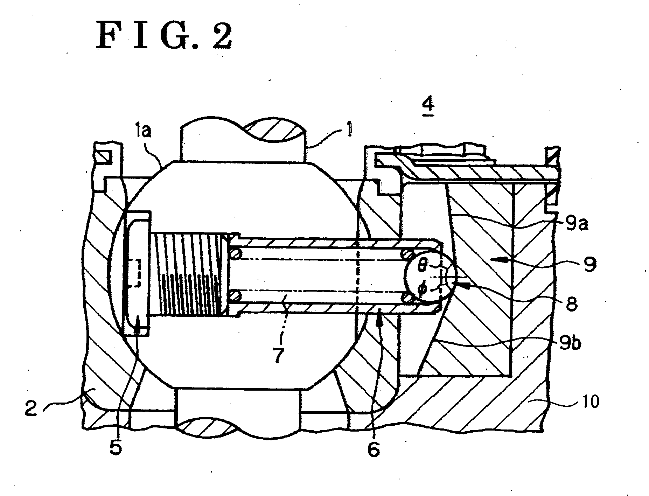

As illustrated in Figs. 1 and 2, a shift lever 1, which is manually operated at one end, is integrally provided with a large spherical portion 1a at an intermediate thereof and a small spherical portion 1b at the other end. The large spherical portion 1a is supported by a shift lever bush 2 so that the shift lever 1 is operated for shift and select operations. The small spherical portion 1b is connected to a shift and select shaft 3 that transmits the operation of the shift lever 1 to a transmission.

A select return mechanism 4 of the embodiment incorporates therein: a bolt 5, which extends along the select direction (the left-and-right direction in Fig. 2) of the shift lever 1 and is threadably engaged with an inner surface of the large spherical portion 1a of the shift lever 1; a cover 6, which extends along the select direction of the shift lever 1 and protrudes from the inside of the spherical portion 1a to the outside thereof; and a spring 7, which extends along the select direction of the shift lever 1 and is compressively mounted inside of the cover 6. One end of the spring 7 is firmly attached to the end surface of the bolt 5 so that the spring 7 is compressed in response to the select operation of the shift lever 1. The select return mechanism 4 further incorporates therein, a ball 8, which is partially housed inside the cover 6 and is in contact with the other end of the spring 7 so that the ball 8 is biased by the spring 7 to the right direction in Fig. 2, and a spacer 9 (a gradient adjusting member), which is supported by a retainer 10 and is formed with guiding surfaces on which the ball 8 slides.

As described above, according to the embodiment, the select return mechanism 4 includes five components such as the bolt 5, the cover 6, the spring 7, the ball 8 and the spacer 9.

The guiding surfaces of the spacer 9 are: a lower-shift stage guiding surface 9a (serving as a first guiding surface) and a higher-shift stage guiding surface 9b (serving as a second guiding surface). When the shift lever 1 is operated to the lower shift stage in the select direction, the ball 8 slides on the lower-shift stage guiding surface 9a. On the other hand, when the shift lever 1 is operated to the higher shift stage in the select direction, the ball 8 slides on the higher-shift stage guiding surface 9b. The lower-shift stage guiding surface 9a is formed at a gradient (angle of gradient, first gradient) θ relative to the axis of the bolt 5, while the higher-shift stage guiding surface 9b is formed at a gradient (angle of gradient, second gradient) φ relative to the axis of the bolt 5. The gradients θ and φ may be defined independently. According to the embodiment, as illustrated in Fig. 2, the gradient θ of the lower-shift stage guiding surface 9a is not identical to the gradient φ of the higher-shift stage guiding surface 9b (φ <θ ), because an amount of spring compression and a load applied to the spacer 9 upon the select operation to the higher-shift stage are greater than those generated upon the select operation to the lower-shift stage.

It is possible to adjust an initial length of the spring 7 by a translational movement of the bolt 5. The cover 6 may be press-fitted into the large spherical portion 1a of the shift lever 1 or may be press-fitted by the bolt 5. The guiding surfaces 9a and 9b are arranged in a manner where ends of the guiding surfaces 9a, 9b, which are located closer to the center of the spacer 9 in the axial direction of the shift lever 1, are located closer to the spacer 9 in the select direction than the other ends thereof, which are located away from the center of the spacer 9 in the axial direction of the shift lever 1. As a result, a groove, which is a V-shape for example, is formed at a connecting point of the one ends of the guiding surfaces 9a, 9b. When the shift lever 1 is positioned in neutral, the ball 8 is biased by the spring 7 to the spacer 9 and is positioned at the groove located at the center of the spacer 9 in the axial direction of the shift lever 1.

Described below is an operation of the select return mechanism according to the embodiment of the present invention. With reference to Figs. 1 and 2, when the shift lever 1 is operated for the select operation to the left side (lower-shift stage) in Fig. 1, the cover 6 is inclined, and the ball 8 slides upward on the lower-shift stage guiding surface 9a while elastically compressing the spring 7. The elastic force, which is accumulated in the compressed spring 7, acts as a force for returning the ball 8 to neutral, i.e., as a select return force for returning the shift lever 1 to neutral along the select direction. Meanwhile, when the shift lever 1 is operated for the select operation to the right side (higher-shift stage) in Fig. 1, the cover 6 is inclined, and the ball 8 slides downward on the higher-shift stage guiding surface 9b while elastically compressing the spring 7. The elastic force, which is accumulated in the compressed spring 7, acts as a force for returning the ball 8 to neutral, i.e., as a select return force for returning the shift lever 1 to neutral along the select direction. According to the embodiment, because the gradient φ of the higher-shift stage guiding surface 9b is smaller than the gradient θ of the lower-shift stage guiding surface 9a, the select return force upon the select operation to the higher-shift stage (the left side in Fig. 2) is greater than that generated upon the select operation to the lower-shift stage (the right side in Fig. 1). When the deflection or compression of the spring 7 is large, the select load is large. That is, the load at the higher-shift stage side is greater than that at the lower-shift stage side.

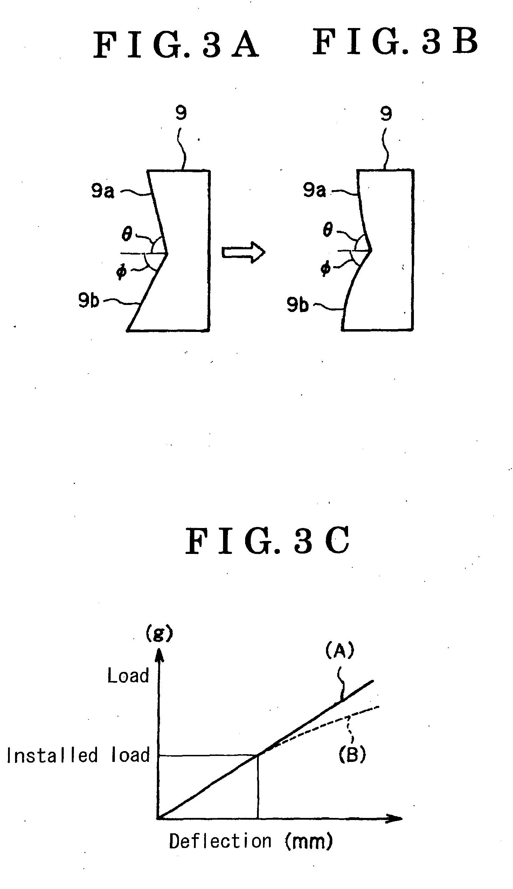

Described below is a variation of the select return mechanism of the above-described embodiment. In Fig. 3A, the gradient θ of the lower-shift stage side and the gradient φ of the higher-shift stage side are each constant over each corresponding guiding surface. In Fig. 3B, the gradient θ of the lower-shift stage side and the gradient φ of the higher-shift stage side each vary over each corresponding guiding surface. Fig. 3C is a load-deformation diagram of the structures in Fig. 3A and in Fig. 3B. With reference to Figs. 3A and 3C, where the gradient θ of the lower-shift stage guiding surface 9a is constant or fixed, a load-deflection curve is a straight or linear line to whichever side the shift lever 1 is operated along the select direction. Here, a linear loading characteristic (select return force characteristic) is obtained. Likewise, the above description is applied to the gradient φ of the higher-shift stage side being constant.

Meanwhile, with reference to Figs. 3B and 3C, where the gradient θ of the lower-shift stage guiding surface 9a varies on the guiding surface 9a, i.e., where the guiding surface 9a is a curved surface, the loading characteristic at the lower side is non-linear. Likewise, the above description is applied to the gradient φ of the higher-shift stage side being variable.

As described above, according to the select return mechanism described above, it is possible, only by changing the shape of the guiding surface, to design various loading characteristics (select return force characteristics) in response to the purposes or in response to the operation angle of the shift lever 1 along the select direction.

The select return mechanism of the embodiment is applied to a shift lever supporting apparatus of a transmission for a vehicle, especially to a floor type shift lever supporting apparatus.

## Claims

1. A select return mechanism of a shift lever (1), comprising:
a spherical portion (1a) provided at the shift lever (1);
a bolt (5) extending along a select direction of the shift lever (1) and threadably engaged with an inner surface of the spherical portion (1a) of the shift lever (1);
a cover (6) extending along the select direction of the shift lever (1) and protruding outwardly from the inside of the spherical portion (1a);
a spring (7) extending along the select direction of the shift lever (1) and compressively mounted inside of the cover (6), one end of the spring (7) being attached to an end surface of the bolt (5) and elastically compressed in response to a select operation of the shift lever (1);
a ball (8) partially housed inside the cover (6) and in contact with the other end of the spring (7) so that the ball (8) is biased by the spring (7); and
a gradient adjusting member (9) having at least one guiding surface (9a/9b) on which the ball (8) slides.

2. A select return mechanism of a shift lever (1) according to claim 1, wherein the at least one guiding surface (9a/9b) includes a first guiding surface (9a), on which the ball (8) slides when the shift lever (1) is manipulated to a lower-shift stage side along the select direction, and a second guiding surface (9b), on which the ball (8) slides when the shift lever (1) is manipulated to a higher-shift stage side along the select direction, and a first gradient (θ) of the first guiding surface is designed independently from a second gradient (φ) of the second guiding surface.

3. A select return mechanism of a shift lever (1) according to claim 2, wherein the first gradient of the first guiding surface is greater than, or equal to, the second gradient of the second guiding surface.

4. A select return mechanism of a shift lever (1) according to claim 2, wherein the first gradient of the first guiding surface is smaller than, or equal to, the second gradient of the second guiding surface.

5. A select return mechanism of a shift lever (1) according to any preceding claim, wherein a gradient of the guiding surface is constant.

6. A select return mechanism of a shift lever (1) according to any preceding claim, wherein a gradient of the guiding surface varies.

7. A select return mechanism of a shift lever (1) according to any preceding claim, wherein the gradient adjusting member (9) is a spacer (9) which includes a first guiding surface, on which the ball (8) slides when the shift lever (1) is manipulated to a lower-shift stage side along the select direction, and a second guiding surface, on which the ball (8) slides when the shift lever (1) is manipulated to a higher-shift stage side along the select direction, and wherein a first gradient of the first guiding surface is designed independently from a second gradient of the second guiding surface.

8. A select return mechanism of a shift lever (1) according to any preceding claim, wherein the select return mechanism is applied to a shift lever supporting apparatus which operatively supports the spherical portion (1a) of the shift lever (1) relative to a retainer (2) so that the shift lever (1) is operated for the shift and select operations.

9. A select return mechanism of a shift lever (1) according to any preceding claim, wherein the select return mechanism is applied to a shift lever supporting apparatus for use in a transmission of a vehicle.
